# EUROPEAN PATENT APPLICATION

(11) **EP 4 810 164 A1**
(43) Date of publication of application: **23.09.2026**
(21) Application number: 25200122.7
(22) Date of filing: 04.09.2025
(51) Int. Cl.: B04C 3/04, A47L 9/16, B01D 45/12, B04C 5/04, B04C 5/26, B04C 5/28

(54) **DOUBLE-CYCLONE SEPARATOR**

(30) Priority: 19.03.2025 CN 202520488778 U
(71) Applicant: Liu, Peng, Shishou City, Hubei Province 434406 (CN)
(72) Inventor: Liu, Peng, Shishou City, Hubei Province 434406 (CN)
(74) Representative: Santarelli

(57) **Abstract**

A double-cyclone separator is provided. The double-cyclone separator includes a first cyclone separation mechanism and a second cyclone separation mechanism. The first cyclone separation mechanism includes a first cyclone generation part arranged on a collection bucket. A first air inlet and a first air outlet are formed in the first cyclone generation part. The second cyclone separation mechanism includes a second cyclone generation part and a second separation bucket. The second cyclone generation part is arranged on the second separation bucket. A second air inlet and a second air outlet are formed in the second cyclone generation part. The first air outlet is formed in the bottom center of the first cyclone generation part, and the first air outlet is connected to the second air inlet. The second separation bucket is arranged on the first cyclone generation part, and the bottom of the second separation bucket extends to the lower part of the first cyclone generation part. A discharge hole is formed in the bottom of the second separation bucket. An openable baffle cover is arranged at the discharge hole. According to the double-cyclone separator, the overall volume is reduced. At the same time, the power loss in conveyance pipelines is reduced, and the work efficiency is higher.

## Description

### Technical Field

The present disclosure belongs to the technical field of cyclone separators, in particular to a double-cyclone separator.

### Background of the Invention

The cyclone separator is equipment for separating a gas-solid system or a liquid-solid system. The working principle is to rely on a rotational motion caused by tangential introduction of an air flow, so that solid particles or liquid drops with large inertial centrifugal force are thrown towards the outer wall for separation. Wherein, the double-cyclone separator can achieve secondary separation, and has a better separation effect. However, at present, the upper double-cyclone separator on the market is basically composed of two single bodies connected in parallel, and is large in volume, so that the small and portable development of the cyclone separator is not facilitated.

### Summary of the Invention

In view of this, the present disclosure aims to provide a double-cyclone separator for disadvantages in the prior art. Two cyclone mechanisms are skillfully combined together, so that the volume of the whole device is reduced.

In order to achieve the above purpose, the disclosure adopts the following technical scheme.

A double-cyclone separator includes a first cyclone separation mechanism and a second cyclone separation mechanism. The first cyclone separation mechanism includes a first cyclone generation part arranged on a collection bucket. A first air inlet and a first air outlet are formed in the first cyclone generation part.

The second cyclone separation mechanism includes a second cyclone generation part and a second separation bucket. The second cyclone generation part is arranged on the second separation bucket. A second air inlet and a second air outlet are formed in the second cyclone generation part.

The first air outlet is formed in the bottom center of the first cyclone generation part, and the first air outlet is connected to the second air inlet.

The second separation bucket is arranged on the first cyclone generation part. The bottom of the second separation bucket extends to the lower part of the first cyclone generation part. A discharge hole is formed in bottom of the second separation bucket. An openable baffle cover is arranged at the discharge hole.

In order to realize the present disclosure, further optimization is made in the above structure. An open end face of the discharge hole is slanted downward, and the baffle cover is hinged to the top of the discharge hole.

In order to realize the present disclosure preferably, further optimization is made in the above structure. An air duct is vertically arranged at the bottom center of the first cyclone generation part, and the first air outlet is formed in the air duct.

In order to realize the present disclosure preferably, further optimization is made in the above structure. The first air outlet is connected to the second air inlet through a guide pipeline.

In order to realize the present disclosure preferably, further optimization is made in the above structure. The first air inlet is arranged on a side surface of the first cyclone generation part.

In order to realize the present disclosure preferably, further optimization is made in the above structure. The second air inlet is formed in a side surface of the second cyclone generation part.

In order to realize the present disclosure preferably, further optimization is made in the above structure. The second air outlet is formed in the center of the top of the second cyclone generation part.

Compared with the prior art, the present disclosure has the following beneficial effects.

According to the double-cyclone separator provided by the present disclosure, the first cyclone separation mechanism and the second cyclone separation mechanism are abutted together, and part of a connecting pipeline of the two separation mechanisms is hidden inside the device, so that the overall volume is reduced. At the same time, the power loss in conveyance pipelines is reduced, and the work efficiency is higher.

### Brief Description of the Drawings

To describe the technical solutions in the embodiments of the present disclosure or in the prior art more clearly, the following briefly describes the attached figures required for describing the embodiments or the prior art. Apparently, the attached figures in the following description show merely some embodiments of the present disclosure, and a person of ordinary skill in the art may derive other drawings from these attached figures without creative efforts.
FIG. 1 is a space structure diagram of a double-cyclone separator in the present disclosure.
FIG. 2 is a bottom structure diagram of a double-cyclone separator in the present disclosure.
FIG. 3 is a front view of a double-cyclone separator in the present disclosure.
FIG. 4 is a section view of A-A direction in FIG. 3.

### Reference signs:

1, first cyclone generation part; 101, first air inlet; 102, first air outlet; 2, second cyclone generation part; 201, second air inlet; 202, second air outlet; 3, second separation bucket; 301, discharge hole; 4, baffle cover; 5, air duct; and 6, guide pipeline.

### Detailed Description of Embodiments

In order to make the purpose, technical scheme and advantages of the present disclosure more clear, the technical scheme of the present disclosure is described in detail as follows. Apparently, the embodiments in the following description are merely a part rather than all of the embodiments of the present disclosure. Based on the embodiment in the present disclosure, all other embodiments obtained by the ordinary technical staff in the art under the premise of without contributing creative labor belong to the scope protected by the present disclosure.

In the description of the present disclosure, it needs to be illustrated that, except as otherwise noted, the meaning of "a plurality of" is two or more than two; and the indicative direction or position relations of the terms such as "upper", "lower", "left", "right", "inside", "outside", "front end", "rear end", "head" and "tail" are direction or position relations illustrated based on the accompanying diagrams, just for facilitating the description of the present disclosure and simplifying the description, but not for indicating or hinting that the indicated device or element must be in a specific direction and is constructed and operated in the specific direction, the terms cannot be understood as the restriction of the present disclosure. Moreover, the terms such as "first", "second", and "third" are just used for distinguishing the description, but cannot be understood to indicate or hint relative importance.

In the description of the present disclosure, it further needs to be illustrated that, except as otherwise noted, the terms such as "mount", "link" and "connect" should be generally understood. For example, the components can be fixedly connected, and also can be detachably connected or integrally connected; the components can be mechanically connected, and also can be electrically connected; and the components can be directly connected, and also can be indirectly connected through an intermediate. For those skilled in the art, the specific meanings of the terms in the present disclosure can be understood according to specific conditions.

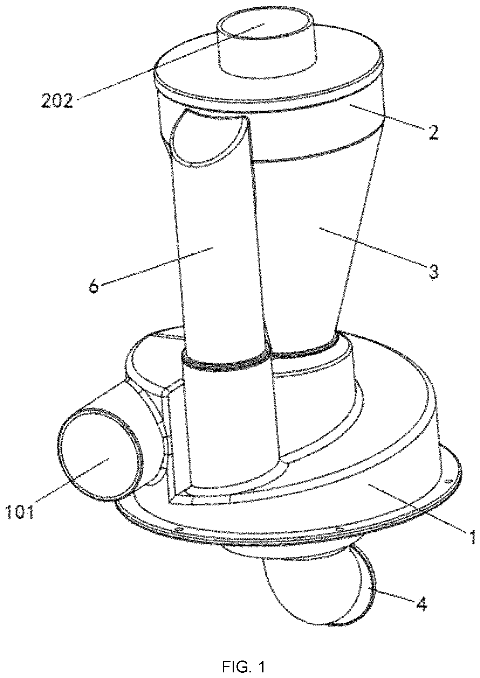

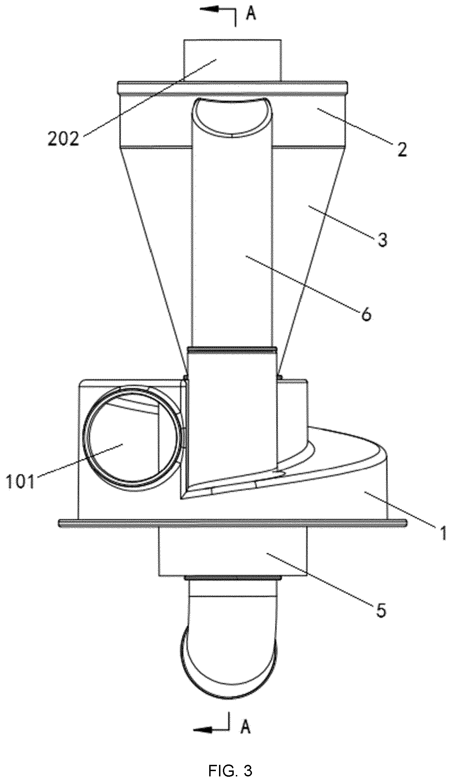

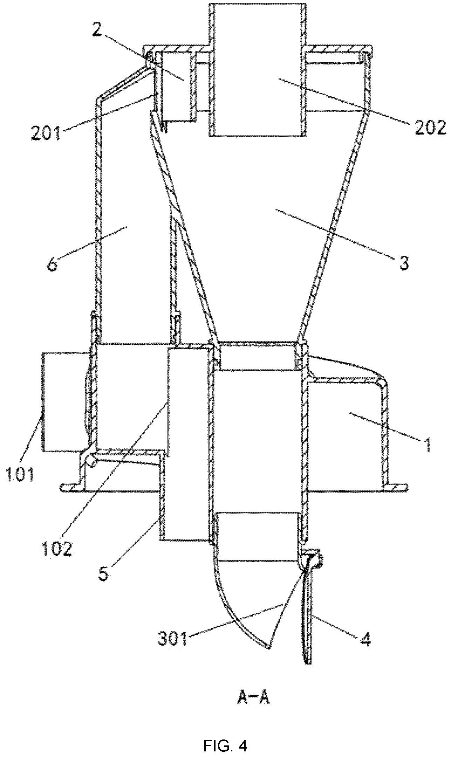

Referring to FIG. 1 to FIG. 4, a double-cyclone separator provided by the present disclosure includes a first cyclone separation mechanism and a second cyclone separation mechanism. The first cyclone separation mechanism includes a first cyclone generation part 1 arranged on a collection bucket (the collection bucket is unshown in attached figures in the prior art in order to highlight important distinguishing points between the present disclosure and the prior art). A first air inlet 101 and a first air outlet 102 are formed in the first cyclone generation part 1. The first air inlet 101 is formed in a side surface of a first cyclone generation part 2. The first air outlet 102 is formed in the bottom center of the first cyclone generation part 1. An air duct 5 is vertically arranged at the bottom center of the first cyclone generation part 1. The first air outlet 102 is formed in the air duct 5 to play a role in guiding wind direction, so that an air flow performing an upward motion at the center of the collection bucket can smoothly and quickly reach the first air outlet 102. The air flow enters from the first air inlet 101, spirally separates dust in the collection bucket, finally moves upward from the bottom center, and then is discharged from the first air outlet 102.

The second cyclone separation mechanism includes a second cyclone generation part 2 and a second separation bucket 3. The second cyclone generation part 2 is arranged on the second separation bucket 3. A second air inlet 201 and a second air outlet 202 are formed in the second cyclone generation part 2. The second air inlet 201 is formed in a side surface of the second cyclone generation part 2. The second air outlet 202 is formed in the top center of the second cyclone generation part 2. Similar to the working principle of the first cyclone separation mechanism, the air flow enters from the second air inlet 201, and then is discharged from the second air outlet 202 after gas-solid separation.

The first air outlet 102 is connected to the second air inlet 201 through a guide pipeline 6, thereby realizing the abutting joint of the first cyclone separation mechanism and the second cyclone separation mechanism. The air flow separated by the first cyclone separation mechanism enters the second cyclone separation mechanism through the guide pipeline 6 to perform secondary separation, and fine-grained dust in the air flow is separated, so that the separation effect is improved.

The double-cyclone separator is mainly matched with a vacuum cleaner to carry out secondary separation of dust. The first cyclone separation mechanism is used to realize the separation of large-grained dust, and the second cyclone separation mechanism is used to realize the separation of fine-grained dust, so that the separation effect of dust is improved. Moreover, compared with a parallel structure in the prior art, the double-cyclone separator has smaller volume and higher separation efficiency, and has a wider application prospect.

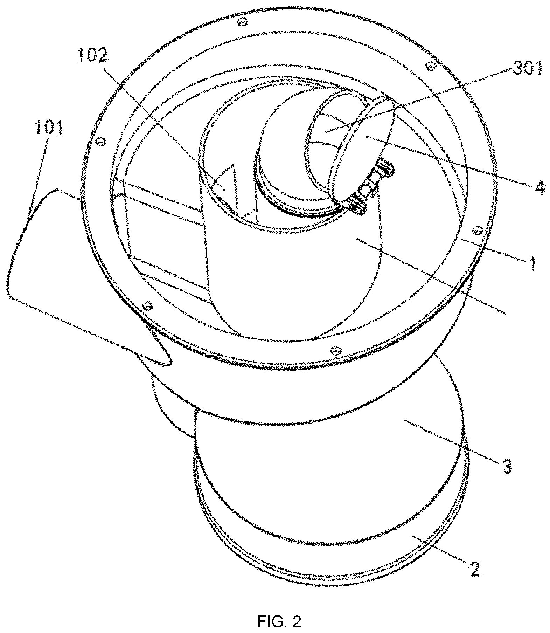

Dust may also be accumulated inside the second separation bucket 3, so the device needs to be designed specially. Referring to FIG. 2, the second separation bucket 3 is arranged on the first cyclone generation part 1, and the bottom of the second separation bucket 3 extends to the lower part of the first cyclone generation part 1. A discharge hole 301 is formed in the bottom the second separation bucket 3. An openable baffle cover 4 is arranged at the discharge hole 301. The dust is cleaned by opening and closing the baffle cover 4. During working, it is necessary to close the baffle cover 4 to allow fine-grained dust in the second separation bucket 3 to be accumulated to the bottom of the second separation bucket 3. When the operation is stopped, it is necessary to open the baffle cover 4 to allow fine-grained dust inside the second separation bucket 3 to fall into the collection bucket below. In order to improve the automation level, in the embodiment, an open end face of the discharge hole 301 is slanted downward. The baffle cover 4 is hinged to the top of the discharge hole 301. Automatic opening of the baffle cover 4 is realized by means of gravity. The baffle cover 4 is automatically closed under the action of suction.

The working principle is as follows.

When in use, the first cyclone generation part 1 of the device needs to be covered on the collection bucket. And then, under the action of suction of the vacuum cleaner, the air flow with dust enters from the first air inlet 101 to carry out primary separation. Large-grained dust in the air flow is separated to be dropped out and accumulated at the bottom of the collection bucket. The separated air flow moves upward from the bottom center to reach the first air outlet 102, and then enters the second air inlet 201 through the guide pipeline 6 to start secondary separation. Small-grained particle dust in the air flow is separated. At the same time, under the action of suction, the baffle cover 4 at the bottom of the second separation bucket 3 is automatically closed. The small-grained dust separated inside the second separation bucket 3 is dropped out and accumulated at the bottom of the bucket. The separated air flow is finally discharged out from the second air outlet 202 to complete separation. At this time, the baffle cover 4 is automatically opened without the action of suction. The small-grained dust accumulated at the bottom of the second separation bucket 3 falls into the collection bucket below for centralized processing.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present invention shall be subject to the protection scope of the claims.

## Claims

1. A double-cyclone separator, comprising a first cyclone separation mechanism and a second cyclone separation mechanism, wherein the first cyclone separation mechanism comprises a first cyclone generation part (1) arranged on a collection bucket, a first air inlet (101) and a first air outlet (102) being formed in the first cyclone generation part (1);
wherein the second cyclone separation mechanism comprises a second cyclone generation part (2) and a second separation bucket (3), the second cyclone generation part (2) being arranged on the second separation bucket (3), and a second air inlet (201) and a second air outlet (202) being formed in the second cyclone generation part (2);
wherein the first air outlet (102) is formed in the bottom center of the first cyclone generation part (1), the first air outlet (102) being connected to the second air inlet (201); and
wherein the second separation bucket (3) is arranged on the first cyclone generation part (1), the bottom of the second separation bucket (3) extending to the lower part of the first cyclone generation part (1), a discharge hole (301) being formed in the bottom of the second separation bucket (3), and an openable baffle cover (4) being arranged at the discharge hole (301).

2. The double-cyclone separator according to claim 1, wherein an open end face of the discharge hole (301) is slanted downward, the baffle cover (4) being hinged to the top of the discharge hole (301).

3. The double-cyclone separator according to claim 1, wherein an air duct (5) is vertically arranged at the bottom center of the first cyclone generation part (1), the first air outlet (102) being formed in the air duct (5).

4. The double-cyclone separator according to claim 3, wherein the first air outlet (102) is connected to the second air inlet (201) through a guide pipeline (6).

5. The double-cyclone separator according to any one of claims 1 to 4, wherein the first air inlet (101) is arranged on a side surface of the first cyclone generation part (2).

6. The double-cyclone separator according to claim 5, wherein the second air inlet (201) is formed in a side surface of the second cyclone generation part (2).

7. The double-cyclone separator according to claim 6, wherein the second air outlet (202) is formed in the center of the top of the second cyclone generation part (2).
